# EUROPÄISCHE PATENTSCHRIFT

(11) **EP 1 433 508 B1**
(45) Veröffentlichungstag und Bekanntmachung des Hinweises auf die Patenterteilung: **22.03.2006**
(21) Anmeldenummer: 02756068.9
(22) Anmeldetag: 04.07.2002
(51) Int. Cl.: B01D 11/00, C11B 1/10

(54) **EXTRAKTIONSSYSTEM ZUR KONTINUIERLICHEN EXTRAKTION VON STOFFEN AUS PFLANZLICHEM ROHMATERIAL MIT CO2**
EXTRACTION SYSTEM FOR THE CONTINUOUS EXTRACTION WITH CO2 OF SUBSTANCES FROM VEGETATIVE RAW MATERIAL
SYSTEME D'EXTRACTION A FONCTIONNEMENT CONTINU PERMETTANT L'EXTRACTION PAR CO2 DE SUBSTANCES ISSUES DE MATIERES PREMIERES VEGETALES

(30) Priorität: 03.09.2001 UA 01096068
(43) Veröffentlichungstag der Anmeldung: 30.06.2004
(73) Patentinhaber: Korniyenko, Anatoliy Valentinovich, 01001 Kiev (UA); Rymarouk, Alexandre Ivanovich, Kiev, 01033 (UA)
(72) Erfinder: Korniyenko, Anatoliy Valentinovich, 01001 Kiev (UA); Rymarouk, Alexandre Ivanovich, Kiev, 01033 (UA)
(74) Vertreter: Jeck, Anton
(86) Internationale Anmeldenummer: PCT/UA2002/000027
(87) Internationale Veröffentlichungsnummer: WO 2003/020390

(56) Entgegenhaltungen:
- DE-A- 4 434 580
- DE-C- 948 325
- RU-C- 2 181 139
- US-A- 4 278 012
- PATENT ABSTRACTS OF JAPAN vol. 011, no. 150 (C-422), 15 May 1987 (1987-05-15) & JP 61 286332 A (HITACHI LTD), 16 December 1986 (1986-12-16)
- PATENT ABSTRACTS OF JAPAN vol. 015, no. 353 (C-0865), 6 September 1991 (1991-09-06) & JP 03 137903 A (MITSUBISHI HEAVY IND LTD), 12 June 1991 (1991-06-12)

## Beschreibung

Die Erfindung bezieht sich im Allgemeinen auf Mittel zur Extraktion von pflanzlichem Rohstoff mit der Verwendung von Lösungsmitteln und genauer auf eine kontinuierlich laufende, autonome Einkreisanlage zur Gewinnung von CO₂ - Extrakten aus dem planzlichem Rohstoff.

### Stand der Technik

Bekannt ist eine Extraktionsanlage zur Herstellung von CO₂ -Extrakten, die im Buch von Kasjanov G. I., Pechov A. B., Taran A. A., "Naturaromastoffe-CO₂₋Extrakte". Moskau: "Lebensmittelindustrie", 1978 r., Seite 74, dargestellt wird.

Die bekannte Anlage enthält mindestens zwei Extraktoren, mindestens zwei Verdampfer, einen Kondensator, einen Behälter für ein Extraktionsmittel (CO₂), eine Unterdruckpumpe zur Entlüftung des Systems, Filter zur Reinigung des Extrakts, Pumpen für die Zuführung der Miszella, einen Regenerator, einen Behälter für Kaltwasser, einen nachheizenden Wasserheizer, wobei diese Bauelemente in der technologischen Reihenfolge mit mit Absperrarmaturen ausgestatteten Rohrleitungen zu einem geschlossenen Kreislauf verbunden sind; es wird die Möglichkeit der Arbeit mit einem Eingehäuse -oder Batterieverfahren vorgesehen. Der Nachteil der bekannten Anlage besteht in der Notwendigkeit der Verwendung von Kreisläufen von Kalt- und Heißwasser, das aus den zentralen oder zusätzlichen Netzen zugeführt wird, wodurch die Möglichkeit der Kontrolle und eine ausreichende Genauigkeit (in der Grenze △t = ± 1°C) der Reproduzierbarkeit des Extraktionsprozesses im eingegebenen Temperaturbereich ausgeschlossen wird; dies stellt die Unabhängigkeit der Arbeit der Anlage nicht sicher und ist mit großem Energieaufwand verbunden. Die Zuleitung von flüssigem CO₂ durch den Selbstfluss in den oberen Teil des Extraktors bedingt eine relativ kleine Gesamtfläche des Kontakts des zerkleinerten Rohstoffs mit dem Extraktionsmittel und verlängert also den Extraktionsprozess, wodurch eine Leistungssteigerung der Anlage nicht ermöglicht wird.

### Kurzfassung der Erfindung

Die Aufgabe dieser Erfindung ist die Entwicklung einer kontinuierlich laufenden, autonomen Einkreisanlage zur Gewinnung von CO₂ -Extrakten aus pflanzlichem Rohstoff, wobei die Einkreisanlage die Erhöhung des Volumens des Endprodukts bei gleichzeitiger Sicherung der Kontrolle sowie die Erhöhung der ausreichenden Genauigkeit (in der Grenze △t = ± 1°C) der Reproduzierbarkeit des Extraktionsprozesses im eingegebenen Temperaturbereich gewährleistet und die den Extraktionsprozess bei gleichzeitiger Reduzierung des Energieaufwands und demzufolge eine Leistungssteigerung ermöglicht.

Diese Aufgabe wird durch die Merkmale des Anspruches gelöst.

Dieser konstruktive Aufbau der vorgeschlagenen Anlage macht es möglich, die Zuleitung von flüssigem CO₂ in den unteren Teil des Extraktors sicherzustellen und infolgedessen die Notwendigkeit der Verwendung einer Unterdruckpumpe im Kreislauf auszuschließen, die Gesamtfläche des Kontakts des zu extrahierenden Rohstoffs mit dem Extraktionsmittel zu erhöhen sowie den Gegenstrom der harten Phase des Rohstoffs mit der flüssigen Phase des Extraktionsmittels zu sichern, indem der Prozess der Extraktion der physiologisch aktiven, organischen und leichtflüchtigen Stoffe beschleunigt wird, die im geschlossenen Kreislauf der Anlage in Form des Extrakts ausreichender Konzentration bleiben. Das Fehlen von Wasserkreisläufen macht es möglich, sich auf die Verwendung solcher konstruktiven Elemente der Anlage, wie Kaltwassersammelbehälter, einer Pumpe für die Zufuhr der Miszella, einem Regenerator und nachheizender Wassererhitzer, zu vernichten; dies vermindert den Metallanteil und den Energieaufwand, und es sichert die Arbeitsunabhängigkeit der Anlage.

Der zusätzliche Behälter für flüssiges CO₂, der mit dem Grundbehälter für flüssiges CO₂ gekoppelt ist, ermöglicht die ununterbrochene Nachspeisung der Anlage mit dem Extraktionsmittel zwecks Auffüllung der natürlichen Verluste beim zulässigen CO₂-Gehalt im fertigen Extrakt sowie der Verluste beim Umladen des Rohstoffs in den Extraktoren.

Die elektronischen Sensoren für die Kontrolle des CO₂ -Volumens im oberen Teil der Extraktore sowie im unteren Teil der Verdampfer ermöglichen die Kontrolle der einzelnen Stadien des technologischen Prozesses, die mit der Durchlaufextraktion zusammenhängen.

Die elektronischen Geräte für die Kontrolle der CO₂ -Temperatur im unterschiedlichen Aggregatzustand machen es möglich, das Produkt mit hoher Reinheit zu gewinnen und den technologischen Gesamtprozess aktiv zu beeinflussen. Die Elektroheizgeräte im unteren Teil der Extraktoren und innerhalb der Verdampfer sichern die Möglichkeit zur ziemlich genauen (in der Grenze △t = ± 1°C) Kontrolle der Temperatur der Extraktion und Verdampfung des Extraktionsmittels sowie der gleichen Wiederholung des Extraktionsmodus.

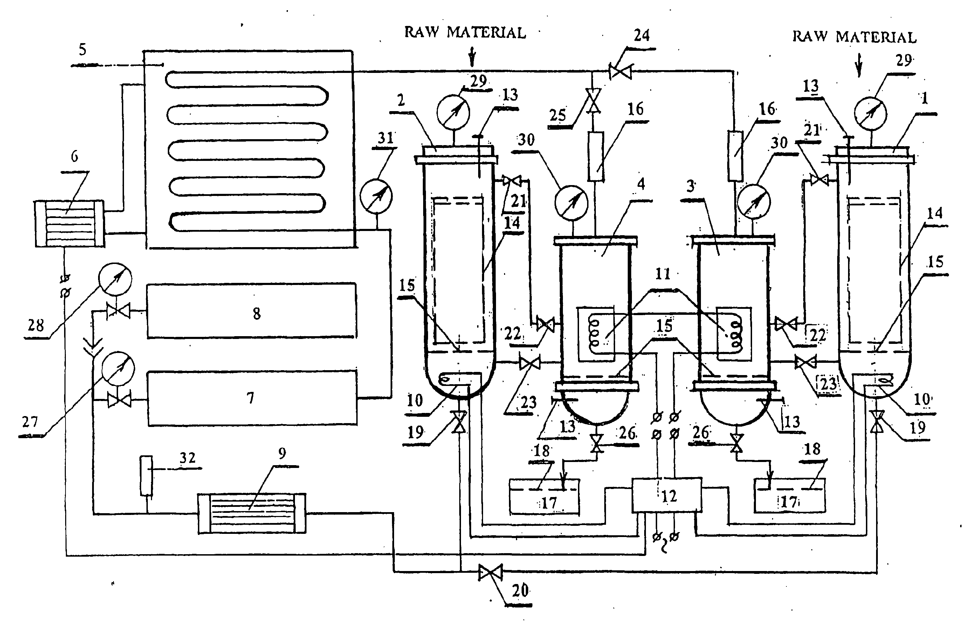

### Kurzbeschreibung der Zeichnung

In der Zeichnung ist eine schematische Darstellung der kontinuierlich laufenden, autonomen Einkreisanlage gemäß der Erfindung zur Gewinnung von CO₂ -Extrakten aus dem pflanzlichen Rohstoff dargestellt.

### Beschreibung eines bevorzugten Ausführungsbeispiels

Die kontinuierlich laufende, autonome Einkreisanlage gemäß der Erfindung enthält einen ersten und zweiten, dicht abschließbaren, vertikal aufgestellten Extraktor 1, 2, einen ersten und zweiten dicht abschließbaren, vertikal aufgestellten Verdampfer 3, 4 eines Extraktionsmittels. Die beiden Paare, bestehend aus dem ersten Extraktor 1 und dem mit diesem verbundenen ersten Verdampfer 3 sowie aus dem zweiten Extraktor 2 und dem mit diesem verbundenen zweiten Verdampfer 4, stellen dabei Modulelemente der Anlage dar. Die Einkreisanlage umfasst ferner einen Kondensator 5 der CO₂ -Dämpfe mit einem Gerät für die Kontrolle der Temperatur (nicht abgebildet), der mit dem ersten und zweiten Verdampfer 3, 4 verbunden und mit einem Kühlaggregat 6 ausgestattet ist, einen Sammelbehälter 7 und einen Zusatzbehälter 8 für flüssiges CO₂, die beide miteinander gekoppelt und vertikal aufgestellt sind, wobei der Sammelbehälter 7 mit dem Kondensator 5 sowie über eine Druckpumpe mit dem ersten und zweiten Extraktor 1, 2 verbunden ist. Die Extraktoren 1, 2, die Verdampfer 3, 4, der Kondensator 5, der Sammelbehälter 7 und der Zusatzbehälter 8 sind mit Rohrleitungen verbunden, die mit einer jeweiligen Absperrarmatur und zugehörigen Prüfmessgeräten (deren ausführlichere Beschreibung unten folgt) ausgestattet sind. Diese Bauelemente bilden einen geschlossenen Kreislauf. Außerdem sind im unteren Teil der Extraktoren 1, 2 und innerhalb der Verdampfer jeweils Elektroheizgeräte 10 und 11 angeordnet, die auf ihrer äußeren Oberfläche mit einem elektronischen Block 12 für die Kontrolle und Steuerung der Temperatur gekoppelt sind. Im oberen Teil jedes Extraktors 1, 2 und unteren Teil jedes Verdampfers 3, 4 ist ein elektronischer Sensor 13 für die Kontrolle des flüssigen CO₂ angeordnet.

Innerhalb jedes Extraktors 1, 2 ist ein Behälter für den zu extrahierenden Rohstoff vorhanden, wobei der Behälter in Form eines modularen, netzförmigen Containers 14 ausgeführt ist. Im unteren Teil jedes Extraktors 1, 2 und Verdampfers 3, 4 ist ein Filter 15 zum Schutz der Oberfläche der Elektroheizgeräte 10, 11 gegen das Eindringen von Rohstoffteilchen sowie jeweils zur Trennung der Miszella des beladenen Extraktionsmittel zu extrahierenden Rohstoffs angeordnet. Auf der Rohrleitung, die jeden der Verdampfer 3, 4 mit dem Kondensator 5 verbindet, ist eine Kammer für die Geschwindigkeitsdämpfung des gasförmigen CO₂ -Stroms angebracht. Unter den Verdampfern 3, 4 sind Sammelbehälter 17 angebracht, die mit Feinfiltern 18 ausgestattet sind.

Wie oben erwähnt wurde, sind die Rohrleitungen, die die konstruktiven Grundelemente verbinden, mit einer Absperrarmatur sowie Prüfmessgeräten ausgestattet, die für die Kontrolle und Steuerung der Arbeitsarten der Anlage bestimmt sind; die auf diesem Gebiet der Technik bekannten Prüfmessgeräte werden bestimmungsmäßig verwendet und sind nicht Gegenstand dieser Erfindung.

Im Einzelnen sind auf der Rohrleitung, die den Sammelbehälter und den Zusatzbehälter 6, 7 mit den Extraktoren 1, 2 verbinden, Verschlussventile 19, 20 angebracht, die für die Regulierung der Zufuhr von flüssigem CO₂ in die Extraktoren 1, 2 aus den Behältern 7, 8 vorgesehen sind. An Überlaufrohrstutzen, die den ersten Extraktor 1 mit dem ersten Verdampfer 3 sowie den zweiten Extraktor 2 mit dem zweiten Verdampfer 4 verbinden, befinden sich Verschlussventile 21, 22 und 23, die jeweils für die Regulierung des Überlaufs der Grundmasse von flüssigem CO₂ und seines Restes aus den Extraktoren 1, 2 in die jeweiligen Verdampfer 3, 4 bestimmt sind. An der Rohrleitung, die die Verdampfer 3, 4 mit dem Kondensator 5 verbindet, sind zugeordnete Verschlussventile 24, 25 installiert, die für die Regulierung der Zuleitung des gasförmigen CO₂ aus den Verdampfern 3, 4 in den Kondensator 5 vorgesehen sind. Außerdem befinden sich an den Ablaufrohren der Verdampfer 3, 4 Verschlussventile 26, die für die Regulierung des Ablaufs des fertigen CO₂ -Extrakts aus den Verdampfern 3, 1 in die Behälter 17 bestimmt sind.

Die Prüfmessgeräte werden für die Kontrolle und Regulierung der Grundparameter der Extraktionsprozesse, d. h. Druck und Temperatur, in verschiedenen Bereichen des Systems eingesetzt. Für die Verfolgung und Regulierung des Drucks von flüssigem CO₂ im Sammelbehälter 7 und Zusatzbehälter 8 sind zugehörige Manometer 27, 28 mit Druckmindern für die Kontrolle des Drucks von flüssigem CO₂ in den Extraktoren 1, 2 und für die Kontrolle von gasförmigem CO₂ in den Verdampfern 3, 4 vorgesehen; in ihrem oberen Teil sind jeweils Manometer 29, 30 angebracht; für die Kontrolle des Drucks in der Rohrleitung, die den Kondensator 5 mit dem Sammelbehälter 6 verbindet, ist ein Manometer 31 vorgesehen. Für die Kontrolle von zugeführtem flüssigen CO₂ ist ein elektronisches Thermometer 32 vorgesehen, das an der Rohrleitung angebracht ist, die den Sammelbehälter 7 mit der Druckpumpe 9 verbindet.

Die Extraktoren 1, 2, die Verdampfer 3, 4 sowie die Behälter 7, 8 haben eine zylindrische Form, z. B. die Form eines Gasbehälters, wie sie auf der Zeichnung abgebildet ist. Die Extraktoren 1, 2 sind aus Stahl hergestellt. Die Verdampfer 3, 4, der Behälter 14 für Rohstoff, Rohrleitungen und der Kondensator 5 sind aus rostfreiem Stahl hergestellt. Der Anschluss der Rohrleitungen an verschiedene Funktionselemente der Anlage sowie die Montage der Absperrarmatur und der Prüfmessgeräte erfolgt mit dem Einsatz von Verfahren, die auf diesem Gebiet der Technik bekannt sind.

Der Extraktionsprozess auf der vorgeschlagenen Anlage erfolgt folgenderweise. In den Extraktoren 1, 2 werden über ihren oberen Teil die Modulcontainer 14 mit dem zerkleinerten, pflanzlichen Rohstoff geladen. Die Extraktoren werden dicht verschlossen. In den unteren Teil des ersten Extraktors 1 wird über das Zufuhrrohrstück aus dem Sammelbehälter 7 flüssiges CO₂ zugeleitet, was bei geöffneten Verschlussventilen 19, 20 des ersten Extraktors 1 mit Hilfe der Druckpumpe 9 realisiert wird, bis im Extraktor der Wert des Betriebsdrucks nicht erreicht wird, der vom Manometer 29 kontrolliert wird. Nach dem Erreichen des Betriebsdrucks im Extraktor 1 öffnen sich die Verschlussventile 21, 22 des Überlaufrohrstutzens, der den ersten Extraktor 1 mit dem ersten Verdampfer 3 verbindet; infolgedessen gelangt das Extraktionsmittel mit der Miszella in den ersten Verdampfer 3.

Im Verdampfer 3 verdampft das Extraktionsmittel 11 bei eingeschaltetem Elektroheizgerät (TEN), läuft im gasförmigen Zustand durch die Kammer 16 zur Dämpfung der Strömungsgeschwindigkeit und gelangt über die Rohrleitung, die den ersten Verdampfer 3 und den Kondensator 5 verbindet, in den Kondensator 5; der Extrakt bleibt jedoch im ersten Verdampfer 3, bis die erforderliche Konzentration nicht erreicht wird. Dabei befindet sich das Verschlussventil 24 an der genannten Rohrleitung im offenen Zustand.

Nach dem von der Technologie vorgesehenen und zeitlich erforderlichen Zyklus der Durchflussextraktion schließen sich die Ventile 21, 22 des genannten Überlaufrohrstutzens; die Verschlussventile 19, 20 der Zuleitung von flüssigem CO₂ in den ersten Extraktor 1 schließen sich; es öffnet sich das Ventil 19 für die Zuleitung von flüssigem CO₂ in den zweiten Extraktor 2; der Extraktionsprozess (Filter 15) wird ununterbrochen nach dem oben beschriebenen Schema in Bezug auf den Extraktor 1 und Verdampfer 3 bei geöffnetem Ventil 25 fortgesetzt. Dabei öffnet sich das Verschfussventil 23, das im unteren Teil des ersten Extraktors angeordnet ist, und der Rest des Extraktionsmittels im Extraktor 1 läuft in den Verdampfer 3 über, wo es nach dem oben beschriebenen Schema (20) in den Kondensator 5 weitergeleitet wird.

Nach dem vom Manometer 30 kontrollierten Druckablass im ersten Verdampfer 3 schließt sich das Ventil 23; die Ventile 21, 22 öffnen sich, und das Elektroheizgerät 10 des ersten Extraktors schaltet sich ein, mit dessen Hilfe aus dem Extraktor 1 die Reste des gasförmigen CO₂ in den Verdampfer 3 entfernt werden (dabei wird die Temperatur CO₂ im Extraktor 1 überkritisch). Danach schließen sich die Ventile 21, 22. Der Druck im Extraktor wird praktisch bis auf den Luftdruck vermindert. Der obere Teil des Extraktors 1 öffnet sich, der Container 14 mit dem gebrauchten Rohstoffschrott wird ausgeladen, und es wird ein neuer Container 14 mit frischem Rohstoff geladen.

Gleichzeitig setzt der zweite Extraktor die Arbeit bei geschlossenen Ventilen 20, 24 nach dem oben beschriebenen Arbeitszyklus fort.

Das fertige Extrakt wird nach dem Durchlaufen über Filter 15 aus den beiden Verdampfern 3, 4 in die jeweiligen Sammelbehälter 17 durch das Öffnen der Ventile 26 und über die Feinfilter 18 abgegossen, abgepackt, etikettiert und ins Fertiglager gebracht.

Das gasförmige CO₂, das aus den Verdampfern 3, 4 in den Kondensator 5 getrieben wird, wird bei laufendem Kühlaggregat 6 kondensiert und gelangt in den Sammelbehälter 7, aus der es in flüssigem Zustand in den Arbeitszyklus mit der Druckpumpe 9 zurückkehrt. Alle Betriebsparameter des technologischen Prozesses (Druck, Temperatur) werden über die Prüfmessgeräte kontrolliert, d. h. den elektronischen Temperatur-Steuerungsblock 10, die Manometer 27, 28, 29, 30, 31, das elektronische Thermometer 32; dadurch wird der Extraktionsprozess aktiv beeinflusst. Bei Bedarf kann der Sammelbehälter 7 mit dem flüssigen CO₂ aus dem Zusatzbehälter 8 nachgespeist werden, ohne die Arbeit der Anlage beenden zu müssen.

Beim Übergang der technologischen Linie auf einen anderen pflanzlichen Rohstoff werden die Extraktoren und Verdampfer dem Waschen und der Dampfbehandlung unterzogen; dadurch wird die Gewinnung der Extrakte ohne Beimischung von Komponenten des vorherigen Rohstoffs ermöglicht.

Die Anlage kann leicht ohne CO₂ -Verlust abmontiert werden, indem alle Ventile 19, 20, 21, 22, 23, 24, 25, 25 bei ausgeschalteter Druckpumpe 9 geschlossen werden und CO₂ voll in den Kondensator 5 getrieben wird. Danach werden die Flansche der Verbindungsrohrstutzen abgetrennt, und die Anlage ist zum Transportieren bereit.

Es ist selbstverständlich, dass die oben angeführte Variante der Realisierung der Erfindung einen illustrativen Charakter trägt und keinesfalls den Umfang dieser Erfindung begrenzt und dass an der Erfindung unterschiedliche Ergänzungen und Modifikationen vorgenommen werden können, die nicht über die Grenzen des Umfangs und Wesens der Erfindung herausgehen, die von dem beigelegten Patentanspruch bestimmt werden.

So kann beispielsweise die Anzahl der Modulelemente der Anlage, die aus dem Extraktor und dem Verdampfer besteht, bei Bedarf erhöht werden, wenn es der technologische Prozess verlangt, dabei benötigt man keine speziellen Kenntnisse für ihre Aufnahme in den Kreislauf, und es soll für Fachleute auf diesem Gebiet selbstverständlich sein.

### Gewerbliche Anwendbarkeit

Die kontinuierlich laufende, autonome Einkreisanlage zur Gewinnung von CO₂₋Substrakten aus pflanzlichem Rohstoff kann in der Landwirtschaft, in der Lebensmittel-, Pharmazie-, Kosmetik- und Parfümerieindustrie sowie in anderen Industriezweigen ihre Anwendung finden, um die Komponenten zu gewinnen, die sowohl für die Produktion der existierenden als auch für die Entwicklung der neuen Erzeugnisse verwendet werden können.

## Patentansprüche

1. Kontinuierlich laufende, autonome Einkreisanlage zur Gewinnung von CO₂₋Extrakten aus pflanzlichem Rohstoff, wobei die Einkreisanlage mindestens zwei Extraktoren (1, 2), mindestens zwei Verdampfer (3, 4), einen Kondensator (5), einen Sammelbehälter (7) für flüssiges CO₂, Filter (18) für die Reinigung des Extraktes, Behälter (14, 17) jeweils für Rohstoff und Extrakt sowie eine Pumpe (9) für die Zuleitung von flüssigem CO₂, die in der technologischen Reihenfolge mit mit Absperrarmaturen ausgestatteten Rohrleitungen in einem geschlossenen Kreislauf verbunden sind, enthält, dass sie zusätzlich Wärmeheizgeräte enthält (10, 11), die jeweils innerhalb der Verdampfer (3, 4) und im unteren Teil jedes der Extraktoren (1, 2) angeordnet sind, wobei dieser Teil über die Pumpe (9) mit dem Sammelbehälter (7) kommuniziert, Sensoren (13) für die Kontrolle des Volumen von flüssigem CO₂, die im oberen Teil der Extraktoren (1, 2) und im unteren Teil der Verdampfer (3, 4) angeordnet sind, ein Kühlaggregat (6), das mit dem Kondensator (5) verbunden ist, sowie einen zusätzlichen Behälter (8) für flüssiges CO₂, der mit dem Sammelbehälter (7) mit der Möglichkeit zur ununterbrochenen Nachspeisung des Kreislaufs mit flüssigem CO₂ verbunden ist, umfasst, wobei jeder der Extraktoren (1, 2) und Verdampfer (3, 4) sowie der Kondensator (5) mit den elektronischen Geräten (12, 32) für die Kontrolle und Steuerung der Temperatur im Laufe der Extrahierung ausgestattet ist.

## Claims

1. Continuously running, autonomous single-circuit arrangement for obtaining CO₂ extracts from raw plant material, wherein the single-circuit arrangement contains at least two extractors (1, 2), at least two evaporators (3, 4), a condenser (5), a storage container (7) for liquid CO₂, filters (18) for cleaning the extract, containers (14, 17) for raw material and extract respectively, as well as a pump (9) for the supply of liquid CO₂, which components are connected in the technological sequence to pipelines, provided with shut-off valves, in a closed circuit, wherein said arrangement additionally contains thermal heating apparatuses (10, 11), which are each disposed internally of the evaporators (3, 4) and in the lower portion of each of the extractors (1, 2), wherein said portion communicates with the storage container (7) via the pump (9), said portion includes sensors (13) for checking the volume of liquid CO₂, which sensors are disposed in the upper portion of the extractors (1, 2) and in the lower portion of the condensers (3, 4), a cooling unit (6), which is connected to the condenser (5), as well as an additional container (8) for liquid CO₂, which container is connected to the storage container (7), having the facility to recharge the circuit with liquid CO₂ in an uninterrupted manner, and wherein each of the extractors (1, 2) and condensers (3, 4), as well as the condenser (5), are provided with the electronic apparatuses (12, 32) for checking and controlling the temperature during the course of the extraction.

## Revendications

1. Installation fonctionnant en continu, autonome et à un seul circuit, d'obtention d'extraits de CO₂ à partir de matière première végétale, l' installation à un seul circuit ayant au moins deux extracteurs (1, 2), au moins deux évaporateurs (3, 4), un condenseur (5), une cuve (7) collectrice pour du CO₂ liquide, un filtre (18) pour la purification de l'extrait, des cuves (14, 17) respectivement pour la matière première et l'extrait, ainsi qu'une pompe (9) pour l'envoi de CO₂ liquide, qui sont montés, suivant un circuit fermé, selon la succession technologique par des canalisations munis de robinets d'arrêt, qui comporte, en outre, des appareils de chauffage par la chaleur (10, 11) qui sont disposés respectivement dans l'évaporateur (3, 4) et dans la partie inférieure de chacun des extracteurs (1, 2), cette partie communiquant par la pompe (9) avec la cuve (7) collectrice, des capteurs (13) pour le contrôle du volume de CO₂ liquide qui sont disposés dans la partie supérieure des extracteurs (1, 2) et dans la partie inférieure des évaporateurs (3, 4), un groupe (6) de refroidissement qui communique avec le condenseur (5) ainsi qu'une cuve (8) supplémentaire pour du CO₂ liquide qui communique avec la cuve (7) collectrice avec la possibilité d'une post-alimentation ininterrompue du circuit par du CO₂ liquide, chacun des extracteurs (1, 2) et l'évaporateur (3, 4) ainsi que le condenseur (5) étant équipés des appareils (12, 32) électroniques pour le contrôle et la maîtrise de la température au cours de l'extraction.
